(19) Europäisches Patentamt
European Patent Office
Office européen des brevets

(11) **EP 3 237 749 B1**

(12) **FASCICULE DE BREVET EUROPEEN**

(45) Date de publication et mention de la délivrance du brevet:
**09.01.2019 Bulletin 2019/02**

(21) Numéro de dépôt: **15826042.2**

(22) Date de dépôt: **22.12.2015**

(51) Int Cl.:
**E02B 9/02** *(2006.01)*        **F03B 17/06** *(2006.01)*
**F03B 15/16** *(2006.01)*        **F03B 15/14** *(2006.01)*

(86) Numéro de dépôt international:
**PCT/FR2015/053707**

(87) Numéro de publication internationale:
**WO 2016/102880 (30.06.2016 Gazette 2016/26)**

(54) **SYSTEME DE PILOTAGE DE DEBIT D'EAU TURBINEE D'UNE PLURALITE D'USINES HYDROELECTRIQUES**

STEUERUNGSSYSTEM FÜR DEN DURCHFLUSS VON TURBINENWASSER AUS EINER VIELZAHL VON HYDROELEKTRISCHEN ANLAGEN

CONTROL SYSTEM FOR FLOW OF TURBINED WATER FROM A PLURALITY OF HYDROELECTRIC PLANTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463076**

(43) Date de publication de la demande:
**01.11.2017 Bulletin 2017/44**

(73) Titulaire: **Electricité de France**
**75008 Paris (FR)**

(72) Inventeurs:
• **DEPRUGNEY, Luc**
  **75003 Paris (FR)**
• **ZARATE, Jennifer**
  **92250 La Garenne Colombes (FR)**
• **ROBERT, Gérard**
  **73290 LA MOTTE SERVOLEX (FR)**

(74) Mandataire: **Regimbeau**
**87 rue de Sèze**
**69477 Lyon Cedex 06 (FR)**

(56) Documents cités:
**FR-A1- 2 983 536     US-A- 5 472 312**

• **Jim Cook ET AL: "Optimization of Hydro-Power Plants for Generation", , 1 février 2008 (2008-02-01), XP055221337, Extrait de l'Internet: URL:http://www.ighem.org/Paper2008/02.pdf [extrait le 2015-10-15]**

**Description**

DOMAINE TECHNIQUE GENERAL ET CONTEXTE DE L'INVENTION

La présente invention se rapporte d'une façon générale aux usines hydroélectriques disposées en série le long d'un cours d'eau, comme divulgué par exemple dans US5472312. L'invention concerne plus précisément un système de pilotage de débit d'eau turbinée d'une pluralité d'usines hydroélectriques disposées en série le long d'un cours d'eau, ainsi qu'une pluralité d'usines hydroélectriques pilotées par ledit système de pilotage.

L'eau turbinée désigne l'eau traversant une turbine hydraulique dans une chute afin de produire une énergie mécanique qui est ensuite convertie en énergie électrique. Ainsi peut-on déduire la puissance électrique générée à partir du débit d'eau turbinée, et vice-versa, au moyen d'abaques de conversion.

La situation dans laquelle des usines hydroélectriques sont disposées en série le long d'un cours d'eau est une situation courante, puisqu'elle correspond par exemple aux cas dans lesquels plusieurs ouvrages hydrauliques de production électrique sont disposés le long d'un fleuve ou d'une rivière, par exemple dans une vallée.

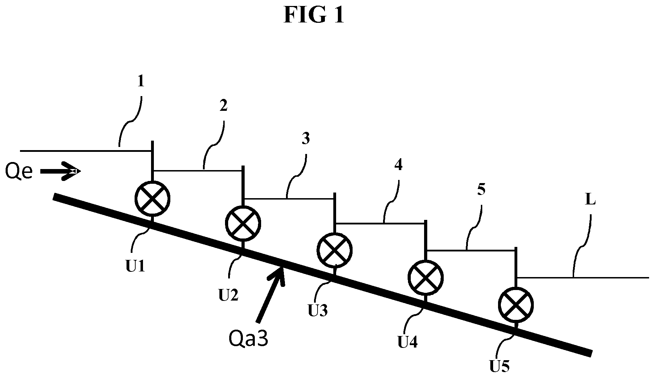

Une telle situation est schématisée par la figure 1, qui est un schéma illustrant un exemple non limitatif de la disposition de cinq usines hydroélectriques disposées en série le long d'un cours d'eau définissant en amont de celles-ci une pluralité de biefs correspondants.

Sur ce schéma, les usines et les biefs sont numérotés dans l'ordre de leur disposition le long du cours d'eau, depuis l'amont vers l'aval, le sens de circulation de l'eau étant noté par une flèche. Ainsi, par exemple, l'usine U3 a les usines U1 et U2 pour usines en amont, et les usines U4 et U5 pour usines en aval.

De même, le bief 3 encadré par l'usine U3 et l'usine U2, a pour biefs amonts le bief 1 en amont de l'usine U1 et le bief 2 entre l'usine U1 et l'usine U2, et a pour biefs avals les biefs 4 et 5 définis respectivement entre l'usine U3 et l'usine U4, et entre l'usine U4 et l'usine U5. Chaque bief i est défini par la portion du cours d'eau immédiatement en amont de l'usine $U_i$, c'est-à-dire entre l'usine $U_{i-1}$ et l'usine $U_i$, et est notamment caractérisé par un niveau d'eau.

Ces usines sont disposées au fil de l'eau le long du cours d'eau, typiquement un cours d'eau tel qu'une rivière, un fleuve ou un canal. Ainsi, l'eau arrive par le bief 1 en amont de la pluralité d'usines passe d'abord par la première usine U1 pour atteindre le deuxième bief 2, puis passe par la deuxième usine U2 pour atteindre le troisième bief 3, ... jusqu'à passer par la dernière usine U5 et sortir de la pluralité de biefs, par exemple pour rejoindre le cours d'eau L en aval de la pluralités d'usines, ou bien encore une mer.

La description qui suit sera notamment faite de manière purement illustrative et non limitative en référence à une telle configuration. En outre, pour des raisons de clarté et de concision, dans le reste de la description, il sera fait référence à l'indice i en tant que référence générale d'un indice ordinal. Ainsi, i peut désigner 1, 2, 3, 4 ou 5, de même que l'usine Ui désignera l'usine U1, l'usine U2, l'usine U3, l'usine U4 ou l'usine U5.

Ces usines hydroélectriques au fil de l'eau sont installées en cascade le long d'un fleuve ou d'une rivière et sont exploitées avec pour principal objectif, outre la production d'électricité, de ne pas perturber l'écoulement naturel du cours d'eau utilisé à des usages multiples (navigation, prélèvements agricoles, activités nautiques...) : il s'agit avant tout de faire transiter le débit de l'amont vers l'aval en respectant des contraintes hydrauliques de débit (en amplitude et en variation) et de niveau, c'est-à-dire maintenir dans chacun des biefs i, le niveau d'eau dans des limites acceptables. Pour ce faire, les usines sont équipées d'une régulation de niveau qui vient modifier la consigne de débit de l'aménagement afin de réguler le niveau.

Les usines au fil de l'eau ont une production d'énergie électrique fatale difficilement prévisible qui subit les variations du débit entrant Qe non maîtrisé ainsi que les apports/prélèvements imprévus dans les biefs i, tels que le débit d'affluent $Q_{a3}$ alimentant le bief 3 sur la figure 1. Cela a pour effet de solliciter la régulation de niveau des biefs i, de modifier la puissance produite par l'usine et donc de dés-optimiser le programme de production élaboré par l'optimiseur (chargé d'optimiser la production sur l'ensemble du parc couvert par le producteur) la veille pour le lendemain. En effet, une sous-production de la file créée par une perturbation hydraulique doit être compensée par le démarrage d'un autre moyen de production qui a un coût.

Compte tenu des imprévues hydrauliques (vidange d'un bassin versant, pluie, prélèvements dans un bief, variation du turbinage de l'usine amont) pouvant survenir à l'amont d'une chaîne d'usines au fil de l'eau, le respect d'un programme journalier de production est difficile et les modifications de programme de production entraînant des redéfinitions de la valeur de la consigne de puissance appliquée à la série d'usines, nuisent au respect d'un programme de production.

En outre, les usines hydroélectriques sont de plus en plus sollicitées pour contribuer en temps réel à l'équilibre production-consommation du réseau en fournissant un service de réglage de fréquence (appelé couramment Service Système ou « Ancillary Service » en anglais). Celui-ci consiste à faire varier en temps réel la puissance fournie autour de son point de fonctionnement en suivant les variations de la fréquence du réseau électrique (on parle alors de réglage primaire fréquence-puissance) et/ou l'évolution du niveau N de téléréglage (on parle alors de réglage secondaire fréquence-puissance).

Le service de réglage secondaire fréquence-puissance rendu au réseau par le producteur est particulièrement difficile à concilier avec les contraintes hydrauliques : les variations de débit turbiné pour fournir ce service perturbent le niveau d'eau dans les biefs qui est contrôlé par la régulation de niveau. En l'absence de dispositif particulier, cette régulation de niveau vient naturellement contrecarrer le réglage secondaire fréquence-puissance. Concilier ce réglage secondaire fréquence-puissance et le respect des contraintes hydrauliques dans les biefs présente donc une difficulté certaine.

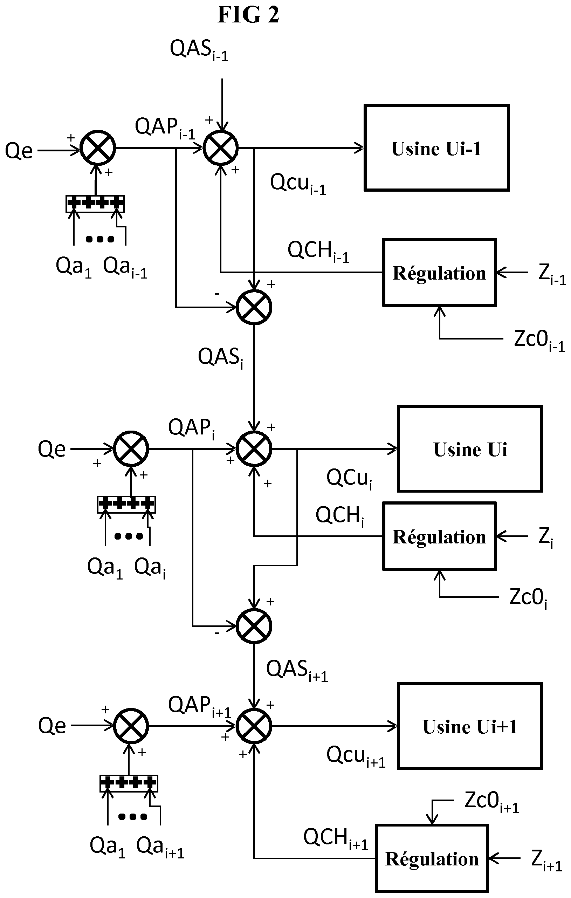

La figure 2 est un schéma illustrant un système de pilotage d'une pluralité d'usines hydroélectriques disposées en série le long d'un cours d'eau. Pour des raisons de clarté et de concision, trois usines dont illustrées : une usine Ui, une usine Ui-1 en amont de l'usine Ui, et l'usine Ui+1 en aval de l'usine Ui.

Classiquement, les usines hydroélectriques au fil de l'eau sont gérées en débit avec une consigne de débit sur l'usine Ui ($QCu_i$) égale à la consigne de débit fil de l'eau $QF_i$. Pour les usines hydroélectriques au fil de l'eau, l'objectif est traditionnellement de respecter impérativement les contraintes hydrauliques (de débit et de niveau) pour les différents biefs i et de suivre le plus possible un programme de puissance défini sur 24h par l'optimiseur. La commande de débit d'eau $Qcu_i$ turbinée par l'usine Ui se décompose en la somme de trois termes de commande.

Un premier terme est le débit d'anticipation parallèle $QAP_i$, qui regroupe la somme des débits entrants naturels mesurés en amont du bief i et dans celui-ci. Il s'agit donc de la somme du débit entrant Qe en provenance de l'amont de la série d'usines, c'est-à-dire le débit arrivant au niveau du premier bief 1, auquel s'ajoute les débits $Qa_i$ des éventuels affluents de chaque bief i. Ainsi:

$$QAP_i = Qe + \sum_{k=1}^{i} Qa_k$$

Le deuxième terme, noté $QCH_i$, est un débit de régulation de niveau du bief i. Traditionnellement, le niveau équivalent $zéq_i$ du bief i est contrôlé par l'usine Ui uniquement au moyen de la régulation de niveau, du type correcteur proportionnel-intégral (PI) asservissant le niveau du bief i à une consigne de niveau $Zc_i$, qui dépend notamment des contraintes hydrauliques du bief i. Le niveau équivalent $Zéq_i$ correspond à la pondération de plusieurs niveaux le long du bief i et est représentative du volume d'eau dans le bief i.

Un troisième terme est habituellement un débit d'anticipation série $QAS_i$ concernant la régulation de niveau des biefs, prenant en compte la différence entre la consigne $Qcu_{i-1}$ et le débit d'anticipation parallèle $QAP_{i-1}$ de l'usine Ui-1 en amont de ladite usine Ui:

$$QAS_i = QCu_{i-1} - QAP_{i-1}$$

Il est à noter qu'en générale la première usine $U_1$ en amont ne disposant pas d'anticipation série, $QAS_1 = 0$. On peut en outre montrer que le débit d'anticipation série $QAS_i$ correspond à la somme des débits de régulation de niveau QCH de l'ensemble des biefs en amont de ladite usine $U_i$, si aucune saturation ou limitation en rampe sur les débits n'est activée, de sorte que le débit d'anticipation série $QAS_i$ pour une usine $U_i$ peut également s'écrire pour $i \geq 2$ :

$$QAS_i = \sum_{k=1}^{i} QCH_k$$

avec $QAS_1 = 0$.

On a donc

$$QCu_i = QAP_i + QCH_i + QAS_i$$

Dans la mesure où ces termes de commandes de débit visent à maintenir le niveau constant dans les biefs hors régulation de puissance et hors démodulation, on peut les regrouper sous l'appellation de consigne de débit fil de l'eau $QF_i$ :

$$QCu_i = QF_i = QAP_i + QCH_i + QAS_i$$

Ce système de pilotage permet généralement la régulation des niveaux des biefs i par la modification des débits d'eau turbinée par les usines hydroélectriques $U_i$, de manière à garantir la sûreté hydraulique en toute situation. La sûreté hydraulique concerne notamment le respect des contraintes de niveau dans les biefs. Ces contraintes en niveaux sont des contraintes de marnage : niveaux minimal et maximal autorisés pour chaque bief afin de permettre la navigation et de garantir la sécurité des biens et des personnes. Le marnage est par définition faible pour les usines au fil de l'eau et souvent nul pour l'usine la plus en amont. L'exploitation des usines en série au fil de l'eau est d'autant plus difficile que les marnages autorisés sont faibles. En outre, d'autres contraintes hydrauliques rendent difficile ce pilotage. Ainsi, le débit entrant Qe est non maîtrisé, et peut varier fortement, résultant par exemple du turbinage d'un producteur électrique en amont, et/ou des apports du bassin versant amont (pluie, fontes des neiges...).

Il est également imposé de restituer, en sortie de la série d'usines, le débit entrant Qe, éventuellement additionné des débits $Qa_i$ des affluents de biefs. C'est ce qu'on appelle la démodulation. Le débit sortant turbiné par la dernière usine est donc contraint d'être « démodulé ». La démodulation classique consiste à restituer en bout de chaîne la somme des débits entrant naturels mesurés à l'amont afin d'effacer toutes les perturbations générées par le fonctionnement des usines hydroélectriques de la file. Il s'agit cependant de débits mesurés, c'est à dire entachés d'erreurs de mesure ; or, les régulations de niveau équipant les usines suppriment ces erreurs de mesure en faisant turbiner le débit entrant réel.

Le critère de démodulation à respecter sur la dernière usine hydroélectrique n est donc

$$Qt_n = QAP_n + \mu = Qe + \sum_{k=1}^{n} Qa_k + \mu$$

Où $Qt_n$ désigne le débit turbiné par l'usine n et $\mu$ une tolérance admissible, de l'ordre de 2% par rapport au débit entrant dans la file Qe. Il est à noter que ce critère de démodulation constitue une contrainte forte difficile à concilier pour les contrôles commandes courants dans d'autres domaines, et qui empêche donc leur utilisation pour commander une pluralité d'usines hydroélectriques disposées au fil de l'eau.

Dans le cadre de ce pilotage, à partir de la prévision la veille pour le lendemain du débit entrant Qe moyenné sur 24 heures, un programme de production est établi par l'optimiseur du producteur. En théorie, avec ce mode de pilotage en débit, les débits entrants dans la file sont intégralement restitués à l'aval, les niveaux d'eau dans les biefs sont maintenus à une cote constante.

L'objectif de l'opérateur de la série d'usines est de respecter le plus longtemps possible le programme de production de puissance demandé par l'optimiseur tout en respectant les contraintes hydrauliques d'exploitation (de débit et de niveau). Le caractère aléatoire du débit entrant Qe qui peut varier brutalement suite à une variation de charge de l'usine amont rend cependant ce suivi de programme de production électrique difficile.

Néanmoins, si des contraintes d'exploitation (typiquement un débit entrant qui diffère sensiblement de celui qu'a utilisé le producteur hydraulique pour élaborer la consigne de puissance) provoquent un risque de non-respect des contraintes hydrauliques (typiquement une dérive des niveaux des biefs), les exploitants modifient manuellement la consigne de puissance en « redéclarant » la valeur au gestionnaire de réseau. Mais, cette « redéclaration » génère d'importantes pénalités financières imputées au producteur. Il est donc souhaitable de minimiser le nombre de redéclarations quotidiennes.

Ainsi, les systèmes classiques de pilotage des usines en débit présentent plusieurs défauts :

- le programme journalier de production n'est respecté qu'avec une certaine tolérance et moyennant plusieurs redéclarations de prévision de puissance produite,
- la fourniture de réglage secondaire fréquence-puissance avec les performances dynamiques requises n'est pas possible,
- la démodulation au niveau du débit turbiné sur la dernière usine n'est assurée que moyennant des corrections manuelles de la consigne de débit usine $QCu_n$.

En outre, aucune boucle de régulation de puissance n'existe pour tenir la puissance globale de la série d'usines. Cela signifie qu'en cas de perturbation imprévue des débits entrants des biefs i, on observe un écart sur la puissance électrique réalisée par rapport à la puissance électrique programmée pour la série d'usines hydroélectriques.

PRESENTATION DE L'INVENTION

L'invention a pour but de pallier au moins un de ces défauts, préférentiellement tous, et notamment de permettre de respecter les contraintes hydrauliques de niveau et de débit sur les biefs, tout en respectant au mieux les consignes de production électrique.

A cet effet, on propose un système de pilotage de débit d'eau turbinée d'une pluralité d'usines hydroélectriques disposées en série le long d'un cours d'eau à écoulement à surface libre, définissant en amont de chacune d'elles une pluralité de biefs respectifs soumis à des contraintes hydrauliques de débit et de niveau, ladite pluralité d'usines hydroélectriques comprenant au moins trois usines hydroélectriques, dans lequel le débit d'eau turbinée par chacune desdites usines est commandé au moyen d'une consigne de débit sur ladite usine déterminée à partir d'une consigne de débit fil de l'eau prenant en compte une régulation de niveau des biefs et les débits entrants dans lesdits biefs, dans lequel le système comprend une régulation d'une consigne de puissance globale de production électrique pour ladite pluralité d'usines hydroélectriques au moyen d'une consigne de débit de régulation prise en compte par la consigne de débit de chacune desdites usines et en ce que ladite consigne de débit de régulation déterminée par ladite régulation est pondérée pour chacune desdites usines au moyen de coefficients de pondération fonction des contraintes hydrauliques de débit et de niveau respectives des biefs définis en amont desdites usines afin de respecter lesdites contraintes hydrauliques de débit et de niveau.

L'invention est avantageusement complétée par les caractéristiques suivantes, prises seules ou en une quelconque de leur combinaison techniquement possible:

- la consigne de puissance globale de production électrique correspond à la somme d'une consigne de puissance d'un programme de puissance et d'une puissance d'équilibrage du réseau électrique auquel est raccordée la pluralité d'usines;
- la régulation de la puissance globale produite par la pluralité d'usines hydroélectriques pour respecter une consigne de puissance globale de production électrique asservit une consigne de puissance effective globale correspondant à la somme des consignes de puissance effective de chaque usine, les consignes de puissance effective de chaque usine étant déterminées au moyen de la consigne de débit de chacune desdites usines;
- les coefficients de pondération sont dynamiques et varient avec le temps;
- la somme des coefficients de pondération appliqués à la consigne de débit de régulation de puissance des usines à l'exception de la dernière usine est égale au nombre n des usines:

$$\sum_{i=1}^{n-1} \alpha_i = n$$

- chacun des coefficients de pondération $\alpha_i$ est déterminé par la minimisation d'un critère correspondant à une équation faisant intervenir le coefficient de pondération $\alpha_i$ à déterminer et le coefficient de pondération $\alpha_{i-1}$ appliqué à l'usine immédiatement amont, le coefficient de pondération $\alpha_1$ de la première usine en amont de la file étant fixe;
- les coefficients de pondération $\alpha_i$ sont déterminés en prenant en compte un écart de niveau entre une consigne nominale de niveau du bief i et une prédiction du niveau dudit bief i à un horizon d'optimisation;
- la prise en compte de l'écart de niveau prend en compte le coefficient de pondération $\alpha_i$ associé à une usine et la pondération $\alpha_{i-1}$ associée à l'usine immédiatement en amont de ladite usine dans une relation linéaire correspondant audit écart de niveau;
- les coefficients de pondération $\alpha_i$ sont constants dans le temps;
- pour les m usines de la file les plus en amont, avec m$\geq$1, le coefficient de pondération $\alpha_i$ d'une usine est supérieur au coefficient de pondération $\alpha_{i-1}$ de l'usine immédiatement amont de ladite usine :

$$\alpha_{i-1} < \alpha_i,$$

et pour les n-r usines de la file les plus en aval, avec r $\geq$1 et n le nombre d'usines, le coefficient de pondération $\alpha_i$ d'une usine est inférieur au coefficient de pondération $\alpha_{i-1}$ de l'usine immédiatement amont de ladite usine :

$$\alpha_{i-1} > \alpha_i.$$

- la détermination d'un coefficient $\alpha_i$ prend en compte pour les m usines de la file les plus en amont avec m$\geq$1 (respectivement pour les n-r usines de la file les plus en aval avec r $\geq$1 et n le nombre d'usines) un rapport entre une variation de volume autorisée pour le bief i et une variation de volume autorisée pour le premier bief amont (respectivement pour le dernier bief aval ;
- pour m usines de la file les plus en amont, avec m$\geq$1 (respectivement pour les n-r usines de la file les plus en aval, avec r $\geq$1 et n le nombre d'usines), le coefficient de pondération $\alpha_i$ d'une usine est déterminé en fonction du coefficient

de pondération $\propto_{i-1}$ de l'usine immédiatement amont de ladite usine et du rapport entre une variation de volume autorisée pour le bief i et une variation de volume autorisée pour le premier bief amont (respectivement pour le dernier bief aval), ledit rapport étant pondéré par le coefficient de pondération associé au premier bief en amont (respectivement par le coefficient de pondération associé à l'avant-dernier bief aval,

tandis que pour les n-r-m usines entre lesdites m usines de la file les plus en amont et lesdites n-r usines de la file les plus en aval, le coefficient de pondération correspond à une même valeur maximale.

L'invention concerne également une pluralité d'usines hydroélectriques disposées en série le long d'un cours d'eau à écoulement à surface libre, définissant en amont de chacune d'elles une pluralité de biefs respectifs, ladite pluralité d'usines hydroélectriques comprenant au moins trois usines hydroélectriques, et comprenant un système de pilotage de débit d'eau turbinée selon l'invention.

PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels:

- la figure 1, déjà commentée, est un schéma illustrant la disposition d'une pluralité d'usines hydroélectriques disposées en série le long d'un cours d'eau définissant en amont d'elles une pluralité de biefs respectifs ;
- la figure 2, déjà commentée, est un schéma illustrant un système de pilotage de l'état de la technique d'une pluralité d'usines hydroélectriques disposées en série le long d'un cours d'eau selon l'état de la technique;
- la figure 3, est un schéma illustrant un système de pilotage d'une pluralité d'usines hydroélectriques disposées en série le long d'un cours d'eau selon les modes de réalisation possibles de l'invention.

DESCRIPTION DETAILLEE

Le premier aspect de l'invention porte sur un système de pilotage de débit d'eau turbinée d'une pluralité d'usines hydroélectriques disposées en série le long d'un cours d'eau à écoulement à surface libre, définissant en amont de chacune d'elles une pluralité de biefs respectifs. Il s'agit d'usines hydroélectriques disposées au fil de l'eau, le long d'une rivière ou d'un fleuve, dans une configuration qualifiée d'écoulement à surface libre par opposition à des conduites forcées, dont la circulation d'eau n'est pas à surface libre.

La figure 1 illustre une configuration possible d'usines hydroélectriques dans laquelle l'invention peut être mise en oeuvre. Le pilotage est mis en oeuvre pour au moins trois desdits biefs, préférentiellement pour chacun desdits biefs i. Comme précédemment, la description sera faite de manière illustrative et non limitative notamment en regard de cette configuration, en reprenant la notation exposée plus haut. L'invention concerne d'ailleurs également une pluralité d'usines hydroélectriques disposées en série le long d'un cours d'eau à écoulement à surface libre, définissant en amont de chacune d'elles une pluralité de biefs 1, 2, 3, 4 respectifs, ladite pluralité d'usines hydroélectriques comprenant au moins trois usines hydroélectriques, et comprenant un système de gestion de débit d'eau turbinée selon l'invention.

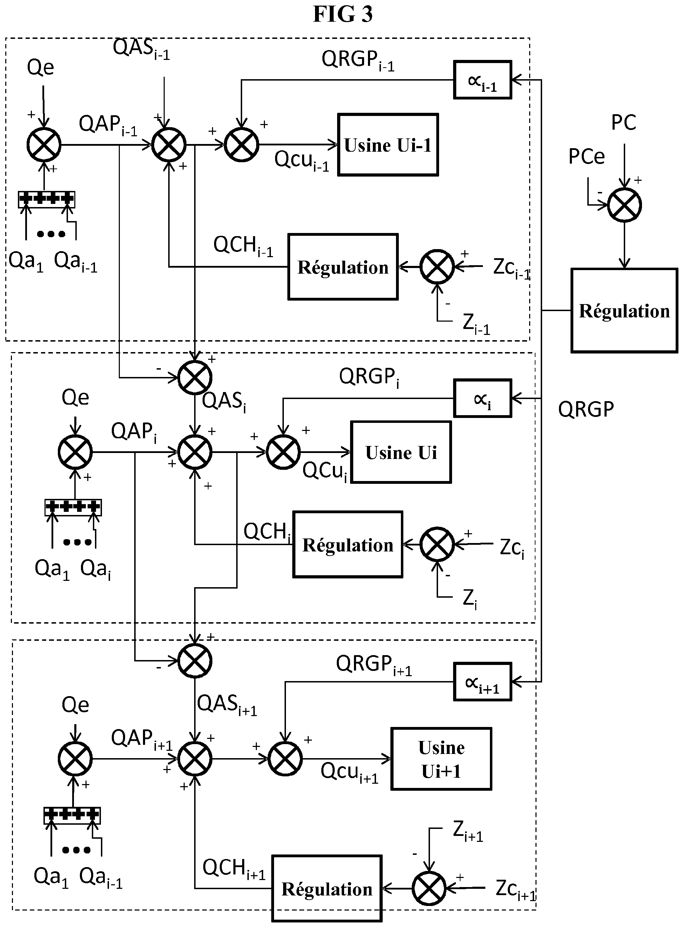

La figure 3 illustre schématiquement un système de pilotage d'usines hydroélectriques en série au fil de l'eau selon un mode de réalisation possible. L'invention est typiquement mise en oeuvre dans le cas d'un système de pilotage existant d'usines hydroélectriques en série au fil de l'eau comme exposé dans la figure 2 détaillé plus haut. Les éléments en commun ne seront donc pas forcément tous détaillés de nouveau.

Comme précédemment, le débit d'eau turbinée par chacune desdites usines est commandé au moyen d'une consigne de débit $QCu_i$ pour ladite usine, déterminée à partir d'une consigne de débit fil de l'eau $QF_i$ prenant en compte une régulation de niveau $QCH_i$ des biefs et les débits entrants dans lesdits biefs, c'est-à-dire le débit entrant Qe et la somme des débits des apports $Qa_i$ des biefs en amont.

Le système comprend une régulation de la puissance électrique pour ladite pluralité d'usines hydroélectriques pour respecter une consigne de puissance globale de production électrique Pc au moyen d'une consigne de débit de régulation de puissance QRGP prise en compte par la consigne de débit $QCu_i$ de chacune desdites usines.

La consigne de puissance globale de production électrique Pc peut correspondre à la somme d'une consigne de puissance d'un programme de puissance Pc0 et d'une puissance d'équilibrage, variant à chaque instant, du réseau électrique auquel est raccordée la pluralité d'usines, notamment dans le cas où la capacité en puissance électrique de la pluralité d'usines est suffisamment importante. Il s'agit alors de fournir des services au réseau électriques en ajustant sa production aux variations de niveau N de téléréglage et aux variations de fréquence de sorte de satisfaire à tout instant et de manière automatique l'équilibre production-consommation. Pour la pluralité d'usines, ce service consiste à produire - en plus de la consigne du programme de puissance Pc0 - des puissances correspondant à ce qu'il est courant d'appeler du réglage primaire et du réglage secondaire dans le respect des critères dynamiques définis par le gestionnaire de réseau électrique. Outre consigne la consigne du programme de puissance Pc0, la consigne de puissance globale de production électrique Pc peut ainsi comprendre un éventuel réglage secondaire, tandis que le réglage primaire est géré au moyen d'une régulation locale propre à chaque groupe de production équipant l'usine Ui.

Le réglage primaire vise à atteindre l'équilibre production-consommation via un asservissement de la fréquence électrique du réseau électrique. Il est donc proportionnel à la différence de fréquence Δf entre la fréquence électrique sur le réseau et une fréquence fixe.

Le but du réglage secondaire est double : résorber l'écart résiduel de fréquence induit par le réglage primaire et corriger les écarts de bilan des zones de réglage. Pour cette raison, ce réglage est mis en oeuvre au niveau global de chaque zone en faisant appel à une puissance réglante secondaire mise à disposition par les groupes de production participant au réglage. Ainsi, on note Pr la puissance électrique correspondant à la participation déclarée par l'exploitant de la file d'usines à ce réglage secondaire. Un signal N de téléréglage compris entre -1 et 1 est appliqué à cette puissance Pr par le gestionnaire du réseau électrique dans le but d'équilibrer l'offre et la demande au sein du réseau électrique dont il a la responsabilité. Ainsi, la consigne de puissance globale de production électrique Pc peut s'écrire :

$$Pc = Pc0 + N.Pr$$

La régulation globale de puissance par la pluralité d'usines hydroélectriques pour respecter la consigne de puissance globale Pc asservit une consigne de puissance effective globale Pce correspondant à la somme des consignes de puissance effective de chaque usine Pcei, les consignes de puissance effective de chaque usine étant déterminée au moyen de la consigne de débit $QC_{ui}$ de chacune desdites usines. Plus précisément, la consigne de puissance effective globale Pce est soustraite à la consigne de puissance globale Pc avant la régulation.

En effet, le débit d'eau turbinée par une usine est commandé au moyen d'une consigne de débit $QCu_i$, qui est convertie en consigne de puissance effective $Pce_i$ pour la commande effective des groupes de production de l'usine. Or, cette conversion fait intervenir des abaques débit/puissance, qui sont nécessairement entachés d'erreur. Cette boucle fermée de la régulation globale de puissance permet de rejeter les erreurs introduites par les abaques.

La différence entre la consigne de puissance globale Pc et la consigne de puissance effective globale Pce passe par un correcteur de régulation de puissance qui détermine, à partir de cette différence, une consigne globale de débit de régulation de puissance QRGP qui est prise en compte par la consigne de débit $QCu_i$ des usines. Le correcteur de régulation de puissance est par exemple un correcteur proportionnel-intégral. Le temps d'échantillonnage peut par exemple être de l'ordre de 5 secondes.

La consigne globale de débit de régulation QRGP déterminée par le correcteur de régulation de puissance est pondérée pour chaque usine au moyen de coefficients de pondération $\propto_i$ propre à chacune desdites usines et fonction des caractéristiques hydrauliques respectives des biefs définis par lesdites usines, pour donner une consigne de débit de régulation $QRGP_i$ propre à chaque usine Ui:

$$QRGP_i = \alpha_i \times QRGP$$

Les coefficients de pondération $\propto_i$ prennent au moins deux valeurs différentes, de préférence au moins trois valeurs différentes. Ils peuvent être dynamiques, c'est-à-dire variables dans le temps ou bien être au contraire statiques, c'est-à-dire constants.

Cette consigne de débit de régulation $QRGP_i$ est utilisée avec d'autres consignes de débit pour donner une consigne de débit d'usine Qcui pour l'usine Ui. Outre la consigne de débit de régulation $QRGP_i$, la consigne de débit d'usine Qcui prend typiquement en compte le débit d'anticipation parallèle QAPi, le débit d'anticipation série QASi et le débit de régulation de niveau QCHi. Ainsi, on peut avoir

$$QCu_i = QAP_i + QCH_i + QAS_i + QRGP_i$$

On peut y adjoindre un débit de démodulation QDDi visant au respect du critère de démodulation selon lequel le débit turbiné par la dernière usine Un doit correspondre au débit Qe complété des éventuels affluents Qa_i des biefs i :

$$Qt_n = QAP_n + \mu = Qe + \sum_{k=1}^{n} Qa_i + \mu$$

où $\mu$ désigne une tolérance admissible, de l'ordre de 2% par rapport au débit entrant dans la file Qe. La fonction démodulation est réalisée en recourant à une régulation de débit aval file entre le débit d'anticipation parallèle QAPn à suivre pour la dernière usine Un et le débit turbiné Qtn à asservir de ladite dernière usine Un. Le terme de débit de démodulation QDD calculé est ajouté aux consignes de débit de la dernière usine Un, voire des dernières usines Un à Un-k. Cette action parallèle revient à reporter à l'amont la contrainte de démodulation aval et à utiliser les biefs intermédiaires pour absorber la contrainte de démodulation.

Plusieurs méthodes peuvent être utilisées pour définir les coefficients de pondération $\propto_i$, dont deux méthodes sont présentées ci-après. L'une faisant intervenir des coefficients de pondération $\propto_i$ dynamiques, tandis que l'autre fait intervenir des coefficients de pondération $\propto_i$ constants.

## Coefficients de pondération $\propto_i$ dynamiques

Dans cette méthode, un module d'optimisation a pour objectif de répartir la puissance file à produire sur chacune des usines en calculant les coefficients $\alpha_i$ dans le respect des contraintes hydrauliques, essentiellement des contraintes de niveau et de débit.

La contrainte de niveau essentielle tient au respect des marnages autorisés $M_i$, c'est-à-dire la différence entre le niveau maximal autorisé dans le bief i et la consigne de niveau $Zc0_i$, sur les niveaux équivalents $z\acute{e}q_i$ des biefs. La consigne de niveau fixe $Zc0_i$ est une consigne constante de niveau du bief i, correspondant à un niveau d'eau imposé pour le bief i, sur une longue période, généralement plusieurs années. Des variations bornées, les marnages autorisés, sont donc possible, mais la consigne de niveau fixe $Zc0_i$ constitue un niveau cible global pour le bief i. Le module d'optimisation a néanmoins pour objectif d'exploiter au maximum les marnages disponibles pour maximiser la puissance de réserve secondaire fréquence-puissance Pr appliquée à la file d'usines Ui et minimiser le nombre de redéclarations éventuelles. La contrainte sur les débit est essentiellement constituée par le respect de la démodulation en aval de la file.

Chacun des coefficients de pondération $\propto_i$ est déterminé par la minimisation d'un critère correspondant à une équation faisant intervenir le coefficient de pondération $\propto_i$ à déterminer et le coefficient de pondération $\propto_{i-1}$ appliqué à l'usine immédiatement amont, le coefficient de pondération $\propto_1$ de la première usine $U_1$ en amont de la file étant fixe, et notamment pouvant être nul dans le cas particulier où aucun marnage n'est autorisé dans le bief 1.

*Critère à minimiser*

L'optimisation se fait selon un horizon de prévision $T_{opt}$ typiquement compris entre 3 minutes et 1 heure, et de préférence entre 15 minutes et 30 minutes. Le critère à minimiser à chaque pas de calcul, typiquement toutes les cinq minutes est le suivant :

$$J = \sum_{i=1}^{n} \lambda_{zi}^2 . \varepsilon_i^2 + \sigma_D . \beta^2 + \sigma_{RR} . \sum_{i=1}^{n-1} (\alpha_i - \alpha_{i\ init})^2$$

(dans la suite, on a $1 \leq i \leq n$ sauf si le contraire est spécifié)

Par ailleurs, si on veut faire apparaître les $Mmax_i$ et $Mmin_i$ pour prise en compte des niveaux de référence $Hr\acute{e}f_i$, mesure de référence du niveau dans le bief i mesurée généralement à l'aval du bief i, les contraintes à respecter sont les suivantes :

- $-\varepsilon_i + \dfrac{Mmax_i - Mmin_i}{2} - \dfrac{M_i}{2} \leq A_i + \alpha_i . B_i + \alpha_{i-1} . C_i \leq \dfrac{Mmax_i - Mmin_i}{2} + \dfrac{M_i}{2} + \varepsilon_i$ où $A_i + \alpha_i . B_i + \alpha_{i-1} . C_i$

  = $zc0_i - z\acute{e}q_i(t_0 + T_{opt})$, ce qui correspond à l'écart de niveau d'eau dans le bief i;

- $-\beta - \mu \leq Q_{D\acute{e}moulation} + Q \leq +\mu + \beta$ où $Q_{Dd\acute{e}modulation} + Q = [QCu_n(t_0 + T_{opt}) - QAP_n(t_0 + T_{opt})]$,

- $\sum_{i=1}^{n-1} \alpha_i = n,$

- $\alpha_1 = 0,$

- un bornage des coefficients de pondération $\alpha_i$ $\alpha_{min} \leq \alpha_i \leq \alpha_{max}$ et un bornage de la variation des coefficients de pondération $\alpha_i$ entre chaque pas de temps $|\Delta\alpha_i| \leq \Delta\alpha_{max}$ pour $1 \leq i \leq n-1$,

- $-300 \leq Q_{Dd\acute{e}modulation} \leq +300,$

Avec :

- La convention $\alpha_n . QRGP = Q_{D\acute{e}modulation} = QRGP_n$

- La convention $\alpha_0 = 0$, représentant l'absence de régulation de puissance sur les usines externes à la file pilotée;
- $Mmin_i = M_i + Hréf_i - zéq_i$;
- $Mmax_i = 2.M_i - Mmin_i$;
- $\mu$ tolérance sur la qualité de la démodulation;
- $\sigma_D$, facteur de priorité constant (réglé pour prioriser la démodulation);
- $\sigma_{RR}$, coefficient de ressort de rappel constant (a priori faible pour ne pas trop concurrencer $J_1$ et/ou $J_2$ lorsque $\beta$ et/ou $\varepsilon_i$ sont non nuls);
- $\lambda_{Zi}$, $A_i$, $B_i$, $C_i$ et Q des réels remis à jour à chaque pas d'optimisation;
- $\alpha_{i\_init}$ correspond à une valeur initiale connue de $\alpha_i$.

Par ailleurs, afin que la consigne globale de débit de régulation QRGP soit intégralement répercutée sur la file au moyen des consignes de débit de régulation $QRGP_i$, la somme des coefficients de pondération appliqués à la consigne de débit de régulation de puissance des usines à l'exception de la dernière usine (dont le coefficient est dicté par la démodulation) est égale au nombre n des usines:

$$\sum_{i=1}^{n-1} \alpha_i = n$$

*Valeurs initiales des coefficients de pondération $\alpha_i$*

Les valeurs initiales des coefficients de pondération $\alpha_i$ sont préalablement déterminées et correspondent au jeu de coefficients fournis au module d'optimisation lors de son initialisation, ou de sa ré-initialisation. Il est rappelé cependant que le premier coefficient $\alpha_1$, fixe, est de préférence choisi nul et que le dernier coefficient $\alpha_n$ dépend de la démodulation. Les autres coefficients de pondération $\alpha_i$ initiaux peuvent être déterminés de différentes façons.

L'une d'elle consiste à déterminer le jeu initial à partir des sur-débits d'éclusée $\Delta QCM_i$ pour chacun des biefs i, c'est-à-dire les variations des débits turbinés dues à l'adaptation de la production électrique aux fluctuations de la demande en électricité. Plus précisément, on peut les déterminer en fonction de la proportion de sur-débits d'éclusée $\Delta QCM_i$ que représente l'usine Ui. Par exemple, on peut ainsi avoir :

$$\alpha_{i\,init} = n.\frac{\Delta QCM_i}{\sum_{i=1}^{n} \Delta QCM_i}$$

Cette détermination permet une continuité par rapport aux configurations existantes grâce à la prise en compte des sur-débits d'éclusée $\Delta QCM_i$. Avec cette première méthode, un exemple de coefficient obtenu pour une file de dix usines est le jeu suivant:
[0 ; 0,3710 ; 0,8207 ; 1,1804 ; 1,4727 ; 1,6863 ; 1,6863 ; 1,6863 ; 1,0961 ; 0]

Une autre méthode consiste à déduire les coefficients de pondération $\alpha_i$ initiaux à partir d'une optimisation statique visant à minimiser le critère

$$\max_i \left(\frac{\alpha_{i-1} - \alpha_i}{S_i}\right)^2$$

Avec cette seconde méthode, un exemple de coefficient obtenu pour une file de dix usines est le jeu suivant:
[0 ; 0,2941 ; 0,6143 ; 0,9022 ; 1,1664 ; 1,7047 ; 2,2928 ; 2,0237 ; 1,0019 ; 0]

*Expression de [$zc0_i$ - $zéq_i(t_0 + T_{opt})$]*

Les coefficients de pondération $\alpha_i$ sont donc déterminés en prenant en compte un écart de niveau entre une consigne nominale fixe de niveau $zc0_i$ du bief i et une prédiction du niveau équivalent $zéq_i$ dudit bief i à un horizon d'optimisation $T_{opt}$:

$$[zc0_i - zéq_i(t_0 + T_{opt})]$$

En notant $t_0$ l'instant présent, pour un bief i considéré, le niveau équivalent pondéré prédit $zéq_i(t_0 + T_{opt})$ est calculé à partir de la consigne de débit $QCu_i$ de l'usine Ui et de la consigne de débit $QCu_{i-1}$ de l'usine i-1 en amont de l'usine Ui:

$$zéq_i(t_0 + T_{opt}) = zéq_i(t_0) + \int_{t_0}^{t_0+T_{opt}} \frac{QCu_{i-1}(t) - QCu_i(t)}{S_i} dt$$

Avec $S_i$ surface apparente du bief i, c'est-à-dire la surface libre du bief i, considérée comme constante. Il est à noter qu'il s'agit d'une approximation puisqu'on considère la variation de volume d'eau dans le bief i entre l'instant présent $t_0$ et l'horizon d'optimisation $T_{opt}$. Mais comme l'estimation de la variation du niveau équivalent $\Delta zeq_i * S_i$ est une très bonne image d'une variation de volume dans le bief i, cette approche est tout à fait valable.

Les trajectoires des consignes de débit $QCu_i$ de chaque usine i sont estimées dans le futur de $t_0$ à $t_0 + T_{opt}$ avec $T_{opt}$ = 5 minutes :

- $QCu_i(t) = QAP_i(t) + QAS_i(t) + QCH_i(t) + QRGP_i(t)$
- $QCu_{i-1}(t) = QAP_{i-1}(t) + QAS_{i-1}(t) + QCH_{i-1}(t) + QRGP_{i-1}(t)$

Si on raisonne en temporel dans l'intervalle $[t_0 ; t_0 + T_{opt}]$ :

- on considére le débit d'anticipation parallèle $QAP_i(t)$ constant en première approche (il est également possible d'estimer un débit d'anticipation parallèle variable $QAP_i(t)$ en considérant une interpolation linéaire simple);
- on considère le débit de régulation de niveau $QCH_i(t)$ constant en première approche. Cette approximation est relativement bonne lorsque $|zc0_i - zéq_i| < M_i$, soit la majeure partie du temps. En effet, dans ce cas, la régulation de niveau du bief i travaille très peu du fait de l'accompagnement du niveau pondéré par la consigne, et $QCH_i(t)$ évolue donc très peu sur l'intervalle pris en compte, de l'ordre de cinq minutes;
- on considère le débit d'anticipation série $QAS_i(t)$ constant en première approche puisqu'il vaut

$$\sum_{k=1}^{i-1} QCH_k(t)$$

Concernant la prise en compte de la régulation de puissance, on a donc en tant que débit de régulation de puissance $QRGP_i$ :

$$QRGP_i(t) = \alpha_i.TI_{RGP}(t_0) + \alpha_i.K_{i\ RGP} \int_{t_0}^{t_0+t} \left(Pc0(u) + N(u).Pr - Pce(u)\right).du$$

$$+ \alpha_i.K_{P\ RGP}.\left(Pc0(t) + N(t).Pr - Pce(t)\right)$$

Avec $TI_{RGP}(t_0)$ terme intégral de la régulation de puissance à l'instant $t_0$, et $K_{i\ RGP}$ et $K_{P\ RGP}$ gains du correcteur de la régulation de puissance. On peut considérer le terme $Pc0(t) + N(t).Pr - Pce(t)$ de la façon suivante :

- $Pc0(t) + N(t).Pr$ constant en première approche entre $t_0$ et $t_0 + T_{opt}$. Néanmoins, une prédiction du débit entrant $Q_e$ permet d'estimer $Pc0(t)$ sur l'intervalle considéré. Il est aussi possible d'envisager d'appliquer des méthodes statistiques pour estimer $N(t)$ dans l'intervalle $[t_0 ; t_0 + T_{opt}]$;
- $Pce(t)$ est considéré convergeant vers $Pc0(t) + N(t).Pr$ en rampe de 5 MW/min.

On applique ensuite le même raisonnement à $QAP_{i-1}(t)$, $QAS_{i-1}(t)$, $QCH_{i-1}(t)$ et $QRGP_{i-1}(t)$. Au final, on obtient donc que

$$[zc0_i - zéq_i(t_0 + T_{opt})] = [A_i + \alpha_i.B_i + \alpha_{i-1}.C_i].$$

Ainsi, la prise en compte de l'écart de niveau prend en compte le coefficient de pondération $\propto_i$ associé à une

usine $U_i$ et la pondération $\propto_{i-1}$ associée à l'usine $U_{i-1}$ immédiatement en amont de ladite usine $U_i$ dans une relation linéaire correspondant audit écart de niveau [zc0$_i$ - zéq$_i$(t$_0$ + T$_{opt}$)].

*Expression de [QCu$_n$(t$_0$ + T$_{opt}$) - QAP$_n$(t$_0$ + T$_{opt}$)]*

En tenant le même raisonnement qu'au-dessus, [QCu$_n$(t0+Topt) - QAP$_n$(t0+Topt)] s'écrit Q$_{\text{Démodulation}}$ + Q et correspond au respect du critère de démodulation à l'horizon de prédiction.

*Elaboration de la consigne de niveau*

La consigne de niveau Zc$_i$ appliquée au régulateur de niveau de l'usine Ui est calculée de manière à accompagner l'évolution naturelle du niveau pondéré zéq$_i$ dans le bief i et donc à minimiser l'action de la régulation de niveau. Pour ce faire, on peut ajouter un terme additionnel ΔZci à la consigne de niveau Zc0i de la régulation de niveau de l'usine Ui :

$$Zc_i = Zc0_i + \Delta Zc_i$$

avec :

$$\Delta Zc_i = \frac{1}{S_i}\int (QRGP_{i-1} - QRGP_i)dt$$

Cependant, l'implémentation de la détermination de coefficients de pondérations dynamiques peut se révéler complexe, et il peut alors être préférable d'utiliser des coefficients de pondération ∝i constants dans le temps, qui soient néanmoins optimisés afin de répondre aux mêmes exigences.

## Coefficients de pondération $\propto_i$ constants

Il s'agit de calculer des coefficients $\alpha_i$ constants et optimaux au sens du temps de vidange et de remplissage des biefs i (i = 1, 2, ..., n) en faisant fonctionner la file selon le principe des vases communicants, c'est-à-dire en transférant le volume d'eau contenu dans les biefs amont vers les biefs aval quand la consigne de débit de régulation QRGP est positive et réciproquement, en transférant le volume d'eau contenu dans les biefs aval vers les biefs amont quand la consigne de débit de régulation QRGP est négative. Ainsi, dans la file on pourra distinguer :

- des biefs émetteurs : les biefs amont fonctionnant en vidange/remplissage ;
- des biefs transmetteurs : les biefs intermédiaires, ayant un rôle soit de transmission directe (sans stockage d'eau) tant que la démodulation n'agit pas sur eux, soit d'absorption lorsque celle-ci agit sur eux ;
- des biefs récepteurs : les biefs aval fonctionnant en remplissage/vidange, c'est-à-dire à l'inverse des biefs amont.

L'évolution du volume d'eau $V_i$ dans un bief i est régie par l'équation :

$$\frac{d(Vo_i + \Delta V_i)}{dt} = QF_{i-1} + u_{i-1} - (QF_i + u_i)$$

où le volume V0$_i$ correspond à la consigne de niveau statique Zc0$_i$ dans le bief i tenue grâce aux débits de débit de fil de l'eau QFj (j=i et i-1) y compris lors de perturbations hydrauliques, typiquement des apports imprévus non mesurés dans un bief. Les variables de commande u$_j$ = QRGP$_j$ + QDD$_j$ permettent de satisfaire aux objectifs et contraintes de pilotage de la file et de démodulation.

En l'absence de démodulation, on peut écrire :

$$\frac{d\Delta V_i}{dt} = (\alpha_{i-1} - \alpha_i)QRGP$$

avec $\Delta V_i = S_i(Z_i - Zc0_i)$ et $S_i$ la surface du bief i

En considérant l'état initial $\Delta V_i(0) = 0$ et l'état final $\Delta V_i(T)$, on a :

$$\Delta V_i(T) = (\alpha_{i-1} - \alpha_i) \int_0^T QRGP\, dt$$

On peut donc écrire à l'instant $t = T$ le rapport R des variations de volume entre deux biefs quelconques d'indice i et x :

$$R = \frac{\Delta V_i(T)}{\Delta V_x(T)} = \frac{\alpha_{i-1} - \alpha_i}{\alpha_{x-1} - \alpha_x}$$

En désignant par T le temps de vidange (respectivement de remplissage) du bief i pour une modification de son niveau équivalent à sa demi bande -Mvi (respectivement Mvi) de volume de marnage autorisée, on a $\Delta V_i(T) = \pm M_{vi}$.

Les biefs i émetteurs sont caractérisés par $\alpha_{i-1} < \alpha_i$ et les biefs i récepteurs sont caractérisés par $\alpha_{i-1} > \alpha_i$. Autrement dit, les biefs émetteurs se vident si la consigne de débit de régulation QRGP est positive pendant que les biefs récepteurs se remplissent, tandis que les biefs émetteurs se remplissent si la consigne de débit de régulation QRGP est négative pendant que les biefs récepteurs se vident.

Ainsi, pour les m usines de la file les plus en amont associées aux biefs émetteurs, avec m≥1, le coefficient de pondération $\propto_i$ d'une usine $U_i$ est supérieur au coefficient de pondération $\propto_{i-1}$ de l'usine immédiatement amont de ladite usine $U_i$ :

$$\propto_{i-1} < \propto_i,$$

et pour les n-r usines de la file les plus en aval associées aux biefs récepteurs, avec r ≥1 et n le nombre d'usines, le coefficient de pondération $\propto_i$ d'une usine $U_i$ est inférieur au coefficient de pondération $\propto_{i-1}$ de l'usine $U_{i-1}$ immédiatement amont de ladite usine $U_i$ :

$$\propto_{i-1} > \propto_i.$$

Quant aux biefs transmetteurs intermédiaires, ils sont caractérisés par $\alpha_{i-1} = \alpha_i = \alpha_{max}$. La valeur maximale des coefficients $\alpha_{max}$ est déterminée indépendamment du temps de vidange si le bilan volumique est respecté parfaitement, et peut par exemple être arbitrairement fixée à 1 pour maîtriser la saturation en débit des usines hydroélectriques $U_i$.

Le but du calcul des $\alpha_i$ est de minimiser le nombre de redéclarations, c'est-à-dire de minimiser le nombre de fois où la consigne du programme de puissance Pc0 est modifiée. Cela revient à minimiser les variations de volume ou à maximiser le temps T de vidange/remplissage.

Pour maximiser le temps T de vidange/remplissage et assurer l'optimalité des coefficients $\alpha_i$ :

- le nombre de biefs transmetteurs est choisi de manière à équilibrer le bilan volumique de transfert d'eau sur la file, c'est-à-dire de sorte que la somme des volumes correspondants aux marnages autorisés Mvi des biefs émetteurs soit la plus proche possible de celle des biefs récepteurs ;
- les biefs émetteurs et récepteurs soient synchrones en saturant au même moment ce qui est assuré par

$$\Delta V_i(T) = (\alpha_{i-1} - \alpha_i) \int_0^T QRGP\, dt$$

en posant : R = Mv$_i$ / Mv$_x$ pour les biefs émetteurs et R = (-Mv$_i$)/(-Mv$_x$) = Mv$_i$ / Mv$_x$ pour les biefs récepteurs.

En appliquant ces deux principes sur un groupe de biefs émetteurs ou récepteurs (R = Mv$_i$ / Mv$_x$), à partir de

$$R = \frac{\Delta V_i(T)}{\Delta V_x(T)} = \frac{\alpha_{i-1} - \alpha_i}{\alpha_{x-1} - \alpha_x}$$

on obtient

$$\alpha_i = \alpha_{i-1} - \frac{Mv_i}{Mv_x}(\alpha_{x-1} - \alpha_x)$$

La détermination d'un coefficient $\alpha_i$ prend ainsi en compte un rapport entre une variation de volume autorisée pour le bief et une variation de volume autorisée pour un bief en amont dudit bief. Les conditions aux limites sont définies par d'une part le bief 1 qui ne reçoit pas de consigne de débit de régulation de puissance QRGP à l'amont, soit $\alpha_0 = 0$ où $\alpha_0$ représente l'absence de régulation de puissance sur les usines externes à la file pilotée, et par le dernier bief n qui est soumis au critère de démodulation, soit $\alpha_n = 0$.

En conséquence, on prend x=1 pour les biefs émetteurs et x=n pour les biefs récepteurs. Les biefs transmetteurs sont situés entre les indices m et r. On a donc pour i = 1, 2,...,n :

- pour les biefs émetteurs : $\alpha_i = \alpha_{i-1} + \alpha_1.Mv_i/Mv_1$ ;
- pour les biefs récepteurs : $\alpha_i = \alpha_{i-1} - \alpha_{n-1}.Mv_i/Mv_n$ ; et
- pour les biefs transmetteurs : $\alpha_i = \alpha_{i-1} = \alpha_{max}$

Par conséquent, pour m usines de la file les plus en amont, avec $m \geq 1$ (respectivement pour les n-r usines de la file les plus en aval, avec $r \geq 1$ et n le nombre d'usines), le coefficient de pondération $\alpha_i$ d'une usine $U_i$ est déterminé en fonction du coefficient de pondération $\alpha_{i-1}$ de l'usine $U_{i-1}$ immédiatement amont de ladite usine $U_i$ et du rapport entre une variation de volume autorisée pour le bief i et une variation de volume autorisée pour le premier bief amont indicé 1 (respectivement pour le dernier bief aval d'indice n), ledit rapport étant pondéré par le coefficient de pondération $\alpha_1$ associé au premier bief 1 en amont (respectivement par le coefficient de pondération $\alpha_{n-1}$ associé à l'avant-dernier bief aval d'indice n-1), tandis que pour les usines n-r-m entre lesdites m usines de la file les plus en amont et lesdites n-r usines de la file les plus en aval, le coefficient de pondération correspond à une même valeur maximale $\alpha_{max}$.

Pour déterminer $\alpha_1$ et $\alpha_{n-1}$, il suffit d'utiliser la récurrence des équations ci-dessus :

- pour les biefs émetteurs :

$$\alpha_i = \alpha_1 \left(1 + \frac{Mv_2}{Mv_1} + \frac{Mv_3}{Mv_1} + \cdots + \frac{Mv_i}{Mv_1}\right)$$

- pour les biefs récepteurs :

$$\alpha_{n-i} = \alpha_{n-1}\left(1 + \frac{Mv_{n-1}}{Mv_n} + \frac{Mv_{n-2}}{Mv_n} + \cdots + \frac{Mv_{n-i+1}}{Mv_n}\right)$$

- pour les biefs transmetteurs :

$$\alpha_m = \alpha_r = \alpha_{max}$$

D'où en posant i = m dans l'équation des biefs émetteurs et n-i = r dans l'équation des biefs récepteurs, il vient :

$$\alpha_1 = \frac{\alpha_{max}}{1 + \sum_{k=3}^{m} Mv_k/Mv_2}$$

et

$$\alpha_{n-1} = \frac{\alpha_{max}}{1 + \sum_{k=r+1}^{n-1} Mv_k/Mv_n}$$

Cette optimisation statique des coefficients de pondération $\alpha_i$ a l'avantage d'offrir une commande limitant des variations du débit turbiné, et qui:

- limite les fluctuations de niveau dans les biefs évitant ainsi une dégradation de la tenue des niveaux assurée par la régulation de niveau,
- limite les sollicitations des actionneurs et du vannage réduisant ainsi leur fatigue mécanique.

*Elaboration de la consigne de niveau*

La consigne de niveau $Zc_i$ appliquée au régulateur de niveau de l'usine Ui est calculée de manière à accompagner l'évolution naturelle du niveau pondéré zéq$_i$ dans le bief i et donc à minimiser l'action de la régulation de niveau. Pour ce faire, on peut ajouter un terme additionnel $\Delta$Zci à la consigne de niveau Zc0i de la régulation de niveau de l'usine Ui :

$$Zc_i = Zc0_i + \Delta Zc_i$$

Pour les biefs émetteurs, le terme additionnel vaut :

$$\Delta Zc_i = \frac{1}{S_i} \int (QRGP_{i-1} - QRGP_i)dt$$

avec $S_i$ désignant la surface du bief i.
Pour les biefs transmetteurs et les biefs récepteurs, l'écart de consigne de niveau devient :

$$\Delta Zc_i = \frac{1}{S_i} \int (QRGP_{i-1} + QDD_{i-1} - QRGP_i - QDD_i)dt$$

avec $\Delta Zc_i$ est borné entre un niveau minimal et un niveau maximal admissible. Il est à noter que la consigne de débit de démodulation QDD$_i$ correspond, pour les usines des biefs récepteurs, à une même consigne globale notée QDD tandis que pour les usines des biefs transmetteurs, il s'agit d'une consigne locale de démodulation.

*Démodulation*

Ainsi qu'expliqué plus haut, la démodulation consiste à respecter le critère de démodulation sur la dernière usine

$$Qt_n = QAP_n + \mu = Qe + \sum_{k=1}^{n} Qa_k + \mu$$

où $\mu$ désigne une tolérance admissible, de l'ordre de 2% par rapport au débit entrant dans la file Qe. La fonction démodulation est réalisée en recourant à une régulation de débit aval file entre la consigne de débit d'anticipation parallèle QAPn à suivre et le débit turbiné Qtn à asservir. Le terme de débit de démodulation QDD calculé est ajouté aux consignes de débit de toutes les centrales de biefs récepteurs. Cette action parallèle revient à reporter à l'amont la contrainte de démodulation aval et à utiliser les biefs transmetteurs pour absorber la contrainte de démodulation.
Le terme de débit global de démodulation QDD est déterminé par une régulation de type proportionnel-intégral sur la différence entre le débit d'anticipation parallèle $QAP_n$ et le débit $Qt_n$ turbiné par la dernière usine Un.
Pour maîtriser l'évolution des niveaux dans les biefs transmetteurs, une régulation de la consigne de niveau aval centrale est implémentée de manière à recentrer les niveaux des biefs. Celle-ci calcule un terme de débit local de démodulation QDDi qui est ajouté aux débits des usines des biefs transmetteurs. Ainsi, le terme de débit local de démodulation QDDi de l'usine du bief i est déterminé par une régulation de type proportionnel-intégral sur la différence entre la consigne de niveau fixe $Zc0_{i+1}$ de l'usine du bief aval i+1 et la consigne niveau $Zc_{i+1}$ appliquée à la régulation de niveau de l'usine du bief aval i+1.

**Revendications**

1. Système de pilotage de débit d'eau turbinée d'une pluralité d'usines hydroélectriques ($U_1$, $U_2$, $U_3$, $U_4$, $U_5$) disposées en série le long d'un cours d'eau à écoulement à surface libre, définissant en amont de chacune d'elles une pluralité de biefs (1, 2, 3, 4, 5) respectifs soumis à des contraintes hydrauliques de débit et de niveau, ladite pluralité d'usines hydroélectriques comprenant au moins trois usines hydroélectriques, dans lequel le débit d'eau turbinée par chacune desdites usines est commandé au moyen d'une consigne de débit ($QCu_i$) sur ladite usine déterminée à partir d'une consigne de débit fil de l'eau prenant en compte une régulation de niveau ($QCH_i$) des biefs et les débits entrants dans lesdits biefs
caractérisé en ce que le système comprend une régulation d'une consigne de puissance globale de production électrique (Pc) pour ladite pluralité d'usines hydroélectriques au moyen d'une consigne de débit de régulation (QRGP) prise en compte par la consigne de débit ($QCu_i$) de chacune desdites usines et en ce que ladite consigne de débit de régulation (QRGP) déterminée par ladite régulation est pondérée pour chacune desdites usines au moyen de coefficients de pondération ($\propto_i$) fonction des contraintes hydrauliques de débit et de niveau respectives des biefs définis en amont desdites usines afin de respecter lesdites contraintes hydrauliques de débit et de niveau.

2. Système selon la revendication précédente, dans lequel la consigne de puissance globale de production électrique (Pc) correspond à la somme d'une consigne de puissance d'un programme de puissance (Pc0) et d'une puissance d'équilibrage du réseau électrique auquel est raccordée la pluralité d'usines (N.Pr).

3. Système selon l'une quelconque des revendications précédentes, dans lequel la régulation de la puissance globale produite par la pluralité d'usines hydroélectriques pour respecter une consigne de puissance globale de production électrique (Pc) asservit une consigne de puissance effective globale (Pce) correspondant à la somme des consignes de puissance effective de chaque usine (Pcei), les consignes de puissance effective de chaque usine étant déterminées au moyen de la consigne de débit ($QCu_i$) de chacune desdites usines.

4. Système selon l'une des revendications précédentes, dans lequel les coefficients de pondération $\propto_i$ sont dynamiques et varient avec le temps.

5. Système selon la revendication précédente, dans lequel la somme des coefficients de pondération appliqués à la consigne de débit de régulation de puissance des usines à l'exception de la dernière usine est égale au nombre n des usines:

$$\sum_{i=1}^{n-1} \alpha_i = n$$

6. Système selon l'une des revendications 4 à 5, dans lequel chacun des coefficients de pondération $\propto_i$ est déterminé par la minimisation d'un critère correspondant à une équation faisant intervenir le coefficient de pondération $\propto_i$ à déterminer et le coefficient de pondération $\propto_{i-1}$ appliqué à l'usine immédiatement amont, le coefficient de pondération $\propto_1$ de la première usine ($U_1$) en amont de la file étant fixe.

7. Système selon l'une des revendications 4 à 6, dans lequel les coefficients de pondération $\propto_i$ sont déterminés en prenant en compte un écart de niveau entre une consigne nominale de niveau ($zc0_i$) du bief i et une prédiction du niveau ($zeq_i$) dudit bief i à un horizon d'optimisation.

8. Système selon la revendication précédente, dans lequel la prise en compte de l'écart de niveau prend en compte le coefficient de pondération $\propto_i$ associé à une usine ($U_i$) et la pondération $\propto_{i-1}$ associée à l'usine ($U_{i-1}$) immédiatement en amont de ladite usine ($U_i$) dans une relation linéaire correspondant audit écart de niveau.

9. Système selon l'une des revendications 1 à 3, dans lequel les coefficients de pondération $\propto_i$ sont constants dans le temps.

10. Système selon la revendication 9, dans lequel pour les m usines de la file les plus en amont, avec $m \geq 1$, le coefficient de pondération $\propto_i$ d'une usine ($U_i$) est supérieur au coefficient de pondération $\propto_{i-1}$ de l'usine immédiatement amont de ladite usine ($U_i$) :

$$\propto_{i-1}<\propto_i,$$

et pour les n-r usines de la file les plus en aval, avec r $\geq$1 et n le nombre d'usines, le coefficient de pondération $\propto_i$ d'une usine (U$_i$) est inférieur au coefficient de pondération $\propto_{i-1}$ de l'usine (U$_{i-1}$) immédiatement amont de ladite usine (U$_i$) :

$$\propto_{i-1}>\propto_i.$$

11. Système selon l'une des revendications 9 à 10, dans lequel la détermination d'un coefficient $\propto_i$ prend en compte pour les m usines de la file les plus en amont avec m$\geq$1 (respectivement pour les n-r usines de la file les plus en aval avec r $\geq$1 et n le nombre d'usines) un rapport entre une variation de volume autorisée pour le bief i et une variation de volume autorisée pour le premier bief (1) amont (respectivement pour le dernier bief aval (n)).

12. Système selon l'une des revendications 9 à 11, dans lequel pour m usines de la file les plus en amont, avec m$\geq$1 (respectivement pour les n-r usines de la file les plus en aval, avec r $\geq$1 et n le nombre d'usines), le coefficient de pondération $\propto_i$ d'une usine (U$_i$) est déterminé en fonction du coefficient de pondération $\propto_{i-1}$ de l'usine (U$_{i-1}$) immédiatement amont de ladite usine (U$_i$) et du rapport entre une variation de volume autorisée pour le bief i et une variation de volume autorisée pour le premier bief amont (1) (respectivement pour le dernier bief aval (n)), ledit rapport étant pondéré par le coefficient de pondération ($\propto_1$) associé au premier bief (1) en amont (respectivement par le coefficient de pondération ($\propto_{n-1}$) associé à l'avant-dernier bief aval (n-1)), tandis que pour les n-r-m usines entre lesdites m usines de la file les plus en amont et lesdites n-r usines de la file les plus en aval, le coefficient de pondération correspond à une même valeur maximale.

13. Pluralité d'usines hydroélectriques (U$_1$, U$_2$, U$_3$, U$_4$, U$_5$) disposées en série le long d'un cours d'eau à écoulement à surface libre, définissant en amont de chacune d'elles une pluralité de biefs (1, 2, 3, 4, 5) respectifs, ladite pluralité d'usines hydroélectriques comprenant au moins trois usines hydroélectriques, et comprenant un système de pilotage de débit d'eau turbinée selon l'une des revendications précédentes.

**Patentansprüche**

1. System zum Steuern des Durchsatzes an turbiniertem Wasser einer Vielzahl von entlang eines Wasserlaufs mit freier Oberflächenströmung in Reihe angeordneten Wasserkraftwerken (U$_1$, U$_2$, U$_3$, U$_4$, U$_5$), die stromaufwärts jeder derselben eine Vielzahl von jeweiligen Staustufen (1, 2, 3, 4, 5) definieren, welche hydraulischen Durchsatz- und Pegeleinschränkungen unterliegen, wobei die Vielzahl von Wasserkraftwerken mindestens drei Wasserkraftwerke umfasst, wobei der Durchsatz an von jedem der Werke turbiniertem Wasser mittels eines Solldurchsatzes (QCu$_i$) am Werk gesteuert wird, der ausgehend von einem Laufwasser-Solldurchsatz bestimmt wird, welcher eine Pegelregelung (QCH$_i$) der Staustufen und die in die Staustufen eingehenden Durchsätze berücksichtigt **dadurch gekennzeichnet, dass** das System eine Regelung einer Gesamtstromerzeugungs-Sollleistung (Pc) für die Vielzahl von Wasserkraftwerken mittels eines Regelsolldurchsatzes (QRGP) umfasst, der vom Solldurchsatz (QCu$_i$) jedes der Werke berücksichtigt wird, und dadurch, dass der von der Regelung bestimmte Regelsolldurchsatz (QRGP) für jedes der Werke mittels Gewichtungskoeffizienten ($\propto_i$) gewichtet wird, die von den jeweiligen hydraulischen Durchsatz- und Pegeleinschränkungen der stromaufwärts der Werke definierten Staustufen abhängig sind, um die hydraulischen Durchsatz- und Pegeleinschränkungen zu beachten.

2. System nach dem vorstehenden Anspruch, wobei die Gesamtstromerzeugungs-Sollleistung (Pc) der Summe aus einer Sollleistung eines Leistungsprogramms (Pc0) und einer Ausgleichsleistung des Stromnetzes entspricht, an das die Vielzahl von Werken (N.Pr) angeschlossen sind.

3. System nach einem der vorstehenden Ansprüche, wobei die Regelung der von der Vielzahl von Wasserkraftwerken erzeugten Gesamtleistung, um eine Gesamtstromerzeugungs-Sollleistung (Pc) zu beachten, eine entsprechende effektive Gesamtsollleistung (Pce) der Summe der effektiven Sollleistungen jedes Werks (Pcei) nachführt, wobei die effektiven Sollleistungen jedes Werks mittels des Solldurchsatzes (QCu$_i$) jedes der Werke bestimmt werden.

4. System nach einem der vorstehenden Ansprüche, wobei die Gewichtungskoeffizienten $\propto_i$ dynamisch sind und zeitlich variieren.

**5.** System nach dem vorstehenden Anspruch, wobei die Summe der Gewichtungskoeffizienten, die auf den Leistungsregelsolldurchsatz der Werke mit Ausnahme des letzten Werks angewendet werden, gleich der Zahl n der Werke ist:

$$\sum_{i=1}^{n-1} \alpha_i = n$$

**6.** System nach einem der Ansprüche 4 bis 5, wobei jeder der Gewichtungskoeffizienten $\alpha_i$ durch die Minimierung eines Kriteriums entsprechend einer Gleichung bestimmt wird, die den zu bestimmenden Gewichtungskoeffizienten $\alpha_i$ und den auf das unmittelbar stromaufwärts gelegene Werk angewandten Gewichtungskoeffizienten $\alpha_{i-1}$ einbezieht, wobei der Gewichtungskoeffizient $\alpha_1$ des ersten Werks ($U_1$) stromaufwärts der Reihe fest ist.

**7.** System nach einem der Ansprüche 4 bis 6, wobei die Gewichtungskoeffizienten $\alpha_i$ unter Berücksichtigung einer Pegelabweichung zwischen einem Nenn-Sollpegel ($zc0_i$) der Staustufe i und einer Prognose des Pegels ($zeq_i$) der Staustufe i in einem Optimierungshorizont bestimmt werden.

**8.** System nach dem vorstehenden Anspruch, wobei die Berücksichtigung der Pegelabweichung den Gewichtungs-koeffizienten $\alpha_i$, der einem Werk ($U_i$) zugeordnet ist, und den Gewichtungskoeffizienten $\alpha_{i-1}$, der dem unmittelbar stromaufwärts des Werks ($U_i$) gelegenen Werk ($U_{i-1}$) zugeordnet ist, in einer linearen Relation berücksichtigt, die der Pegelabweichung entspricht.

**9.** System nach einem der Ansprüche 1 bis 3, wobei die Gewichtungskoeffizienten $\alpha_i$ zeitlich konstant sind.

**10.** System nach Anspruch 9, wobei bei den m am weitesten stromaufwärts gelegenen Werken der Reihe, wobei m≥1, der Gewichtungskoeffizient $\alpha_i$ eines Werks ($U_i$) größer ist als der Gewichtungskoeffizient $\alpha_{i-1}$ des unmittelbar strom-aufwärts des Werks ($U_i$) gelegenen Werks:

$$\alpha_{i-1} < \alpha_i,$$

und bei den n-r am weitesten stromabwärts gelegenen Werken der Reihe, wobei r≥1 und n die Zahl von Werken, der Gewichtungskoeffizient $\alpha_i$ eines Werks ($U_i$) kleiner ist als der Gewichtungskoeffizient $\alpha_{i-1}$ des unmittelbar strom-aufwärts des Werks ($U_i$) gelegenen Werks ($U_{i-1}$) :

$$\alpha_{i-1} > \alpha_i.$$

**11.** System nach einem der Ansprüche 9 bis 10, wobei die Bestimmung eines Koeffizienten $\alpha_i$ für die m am weitesten stromaufwärts gelegenen Werke der Reihe, wobei m≥1 (beziehungsweise für die n-r am weitesten stromabwärts gelegenen Werke der Reihe, wobei r≥1 und n die Zahl von Werken), ein Verhältnis zwischen einer für die Staustufe i zulässigen Volumenschwankung und einer für die erste stromaufwärtige Staustufe (1) (beziehungsweise für die letzte stromabwärtige Staustufe (n)) zulässigen Volumenschwankung berücksichtigt.

**12.** System nach einem der Ansprüche 9 bis 11, wobei für die m am weitesten stromaufwärts gelegenen Werke der Reihe, wobei m≥1 (beziehungsweise für die n-r am weitesten stromabwärts gelegenen Werke der Reihe, wobei r≥1 und n die Zahl von Werken), der Gewichtungskoeffizient $\alpha_i$ eines Werks ($U_i$) abhängig vom Gewichtungskoeffizienten $\alpha_{i-1}$ des unmittelbar stromaufwärts des Werks ($U_i$) gelegenen Werks ($U_{i-1}$) und vom Verhältnis zwischen einer für die Staustufe i zulässigen Volumenschwankung und einer für die erste stromaufwärtige Staustufe (1) (beziehungsweise für die letzte stromabwärtige Staustufe (n)) zulässigen Volumenschwankung bestimmt wird, wobei das Ver-hältnis mit dem Gewichtungskoeffizienten ($\alpha_1$) gewichtet wird, der der ersten stromaufwärtigen Staustufe (1) zugeordnet ist (beziehungsweise mit dem Gewichtungskoeffizienten ($\alpha_{n-1}$), der der vorletzten stromabwärtigen Staustufe (n-1) zugeordnet ist),
während für die n-r-m Werke zwischen den m am weitesten stromaufwärts gelegenen Werken der Reihe und den n-r am weitesten stromabwärts gelegenen Werken der Reihe der Gewichtungskoeffizient ein und demselben Maximalwert entspricht.

**13.** Vielzahl von entlang eines Wasserlaufs mit freier Oberflächenströmung in Reihe angeordneten Wasserkraftwerken

($U_1$, $U_2$, $U_3$, $U_4$, $U_5$), die stromaufwärts jeder derselben eine Vielzahl von jeweiligen Staustufen (1, 2, 3, 4, 5) definieren, wobei die Vielzahl von Wasserkraftwerken mindestens drei Wasserkraftwerke umfasst und ein System zum Steuern des Durchsatzes an turbiniertem Wasser nach einem der vorstehenden Ansprüche umfasst.

**Claims**

1. A system for driving a turbined water flow rate of a plurality of hydroelectric plants ($U_1$, $U_2$, $U_3$, $U_4$, $U_5$) arranged in series along a watercourse with an open channel flow, defining upstream of each of them a plurality of respective reaches (1, 2, 3, 4, 5) subjected to hydraulic flow rate and level requirements, said plurality of hydroelectric plants comprising at least three hydroelectric plants, wherein the turbined water flow rate for each of said plants is controlled by means of a flow rate setpoint ($QCu_i$) on said plant determined from a run-of-the-river flow rate setpoint taking into account a level regulation ($QCH_i$) of the reaches and the inflow rates in said reaches **characterised in that** the system comprises a regulation of an overall power output setpoint (Pc) for said plurality of hydroelectric plants by means of a regulation flow rate setpoint (QRGP) taken into account by the flow rate setpoint ($QCu_i$) of each of said plants and **in that** said regulation flow rate setpoint (QRGP) determined by said regulation is weighted for each of said plants by means of weighting coefficients ($\propto_i$) as a function of the respective flow rate and level hydraulic requirements of the reaches defined upstream of said plants in order to meet said flow rate and level hydraulic requirements.

2. The system according to the preceding claim, wherein the overall power output setpoint (Pc) corresponds to the sum of a power setpoint (Pc0) of a power program and a balancing power for the power grid to which the plurality of plants (N.Pr) is connected.

3. The system according to any of the preceding claims, wherein the regulation of the overall power produced by the plurality of hydroelectric plants to meet an overall power output setpoint (Pc) controls an overall effective power setpoint (Pce) corresponding to the sum of the effective power setpoints of each plant (Pcei), the effective power setpoints of each plant being determined by means of the flow rate setpoint ($QCu_i$) of each of said plants.

4. The system according to one of the preceding claims, wherein the weighting coefficients $\propto_i$ are dynamic and vary over time.

5. The system according to the preceding claim, wherein the sum of the weighting coefficients applied to the power regulation flow rate setpoint of the plants except for the last plant is equal to the number n of the plants:

$$\sum_{i=1}^{n-1} \alpha_i = n$$

6. The system according to one of claims 4 and 5, wherein each of the weighting coefficients $\propto_i$ is determined by minimising a criterion corresponding to an equation involving the weighting coefficient $\propto_i$ to be determined and the weighting coefficient $\propto_{i-1}$ applied to the immediately upstream plant, the weighting coefficient $\propto_1$ of the first plant ($U_1$) upstream of the queue being fixed.

7. The system according to one of claims 4 to 6, wherein the weighting coefficients $\propto_i$ are determined by taking into account a level deviation between a nominal level setpoint ($zc0_i$) of the reach i and a prediction of the level ($zeq_i$) of said reach i at an optimisation horizon.

8. The system according to the preceding claim, wherein taking into account the level deviation takes into account the weighting coefficient $\propto_i$ associated with a plant ($U_i$) and the weighting $\propto_{i-1}$ associated with the plant ($U_{i-1}$) immediately upstream of said plant ($U_i$) in a linear relationship corresponding to said level deviation.

9. The system according to one of claims 1 to 3, wherein the weighting coefficients $\propto_i$ are constant over time.

10. The system according to claim 9, wherein for the m most upstream plants of the queue, with m $\geq$ 1, the weighting coefficient $\propto_i$ of a plant ($U_i$) is higher than a weighting coefficient $\propto_{i-1}$ of the plant immediately upstream of said plant ($U_i$):

$$\propto_{i-1} \; < \; \propto_i,$$

and for the n-r most downstream plants of the queue, with $r \geq 1$ and n the number of plants, the weighting coefficient $\propto_i$ of a plant ($U_i$) is lower than the weighting coefficient $\propto_{i-1}$ of the plant ($U_{i-1}$) immediately upstream of said plant ($U_i$):

$$\propto_{i-1} \; > \; \propto_{i.}$$

**11.** The system according to one of claims 9 and 10, wherein determining a coefficient $\propto_i$ takes into account for the m most upstream plants of the queue with $m \geq 1$ (respectively for the n-r most downstream plants of the queue with $r \geq 1$ and n the number of plants), a ratio of a permitted volume variation for the reach i and a permitted volume variation for the first upstream reach (1) (respectively for the last downstream reach (n)).

**12.** The system according to one of claims 9 to 11, wherein for m most upstream plants of the queue, with $m \geq 1$ (respectively for the n-r most downstream plants of the queue, with $r \geq 1$ and n the number of plants), the weighting coefficient $\propto_i$ of a plant ($U_i$) is determined as a function of the weighting coefficient $\propto_{i-1}$ of the plant ($U_{i-1}$) immediately upstream of said plant ($U_i$) and the ratio of a permitted volume variation for the reach i to a permitted volume variation for the first upstream reach (1) (respectively for the last downstream reach (n)), said ratio being weighted by the weighting coefficient ($\propto_1$) associated with the first upstream reach (1) (respectively by the weighting coefficient ($\propto_{n-1}$) associated with the next-to-last downstream reach (n-1)), whereas for the n-r-m plants between said most upstream plants of the queue and said n-r most downstream plants of the queue, the weighting coefficient corresponds to a same maximum value.

**13.** A plurality of hydroelectric plants ($U_1$, $U_2$, $U_3$, $U_4$, $U_5$) arranged in series along a watercourse with an open channel flow, defining upstream of each of them a plurality of respective reaches (1, 2, 3, 4, 5), said plurality of hydroelectric plants comprising at least three hydroelectric plants, and comprising a system for driving a turbined water flow rate according to one of the preceding claims.

**FIG 1**

**FIG 2**

# FIG 3

**EP 3 237 749 B1**

## RÉFÉRENCES CITÉES DANS LA DESCRIPTION

**Documents brevets cités dans la description**

- US 5472312 A